# EUROPÄISCHE PATENTSCHRIFT

(11) **EP 1 065 374 B1**
(45) Veröffentlichungstag und Bekanntmachung des Hinweises auf die Patenterteilung: **25.06.2008**
(21) Anmeldenummer: 00113466.7
(22) Anmeldetag: 26.06.2000
(51) Int. Cl.: F03D 11/00, F03D 11/04, F03D 7/02

(54) **Verfahren zur Reduzierung von Schwingungen in Windkraftanlagen**
Method to reduce vibrations in wind turbines
Méthode de réduction des vibrations dans des éoliennes

(30) Priorität: 02.07.1999 DE 19930751
(43) Veröffentlichungstag der Anmeldung: 03.01.2001
(73) Patentinhaber: Mitsch, Franz, 64646 Heppenheim (DE)
(72) Erfinder: Mitsch, Franz, 64646 Heppenheim (DE); Hinz, Uwe, 25795 Weddingstedt (DE)
(74) Vertreter: Benz, Jürgen

(56) Entgegenhaltungen:
- WO-A-97/42409
- DE-C- 4 428 424
- US-A- 4 515 525

## Beschreibung

Die Erfindung betrifft ein Verfahren zur Reduzierung von Schwingungen von Bauteilen in Windkraftanlagen unter gleichzeitiger Körperschallisolierung. Die nach dem erfindungsgemäßen Verfahren hergestellten Windkraftanlagen besitzen elastomere Lager mit stark dämpfenden Eigenschaften aber geringer Federsteifigkeit.

Hohe Türme sind nicht selten großen Windkräften ausgesetzt, worauf sie entsprechend ihren Resonanzeigenschaften zu schwingen beginnen. Schwingungen größerer Amplituden sind aber generell unerwünscht.

Besonders eklatant ist das Problem bei Windkraftanlagen, die nicht selten über 50 Meter hohe schlanke Türme aufweisen, auf denen ein Maschinenhaus mit großen Rotorblättern angebracht ist, wodurch zusammen mit den Windkräften unterschiedliche Kräfte auf das gesamte Bauwerk einwirken. Mit größer werdenden Windkraftanlagen und mit den dadurch immer höher werdenden Türmen werden die Türme, bzw. die Anlagen in zunehmendem Maß schwingungsempfindlicher.

Bei den Anlagen im unmittelbaren Küstenbereich (offshore), welche neben den Windkräften auch von der Meeresströmung und vom Wellengang bewegt werden, ist eine Lösung der Schwingungsprobleme von besonderer Bedeutung, zumal hier Schwingungen von nicht beeinflußbarer Frequenz auftreten.

Windkraftanlagen haben teilweise Drehzahl variable Maschinen, womit sich ein weiteres Problem ergibt, daß die Betriebsdrehzahl oft die Turmeigenfrequenzen durchläuft, so daß am Turm starke Bewegungen durch Resonanzerscheinungen entstehen.

Windkraftanlagen weisen selbst hoch elastische Bauteile auf wie Stahlturm, Rohr- oder Gittermast (selten Betontürme), Maschinenhaus sowie insbesondere die Rotoreinheit, bestehend im wesentlichen aus Rotorblättern und Rotorwelle, welche im allgemeinen vorwiegend aus Glas- oder Kohlefaser und / oder Kunststoff - Elementen gefertigt ist.

Alle diese Elemente sind hoch elastisch. Hoch elastische Teile weisen aber naturgemäß keine oder nur sehr geringe Dämpfungseigenschaften auf. Aus diesem Grund stellen Windkraftanlagen sehr schwingungsfähige bzw. schwingungsanfällige System dar.

Dieser Tatsache kann dadurch Rechnung getragen werden, in dem versucht wird, die Bauweise bzw. Auslegung der Windkraftanlagen so zu beeinflussen, daß die Abstände zwischen den naturgemäß vorhandenen Eigenfrequenzen der Bauteile bzw. des ganzen Systems und den auftretenden Betriebsfrequenzen möglichst groß sind.

Bei Windkraftanlagen kleinerer Bauweise bis ca. 30 m Rotordurchmesser ist dies weitestgehend gelungen. Die Problematik tritt jedoch bei größeren Windkraftanlagen stärker auf, da hier neben den Drehzahlen die Wind- erregten Schwingungen durch die naturgemäß weiche Bauart der langen Rotorblätter verstärkt auftreten.

So tritt bei Rotordurchmessern von größer als 40 m häufig das Problem sogenannter "Egdewise" Schwingungen auf, die durch das Zusammenspiel der Strömungsablösung an den (in der Regel drei) Blättern und deren Steifigkeit induziert werden. Dabei schwingen die Rotorblätter in der Rotorkreisebene entweder gleichzeitig in Umfangsrichtung oder - und das besonders häufig auch Y- förmig gegeneinander in der Form, daß ein Blatt nicht schwingt während die beiden restlichen Blätter gegeneinander in Umfangsrichtung schwingen.

Dieses Problem wird nach dem Stand der Technik dadurch gelöst, daß Schwingungssensoren in die Rotorblätter eingebaut werden, welche diese kritischen Schwingungen messen und die Anlage beim deren Auftreten ausschalten, da sonst die Rotorblätter bereits nach kurzer Zeit zerstört werden.

Es wurde auch schon der Einsatz von Schwingungstilgern in den Blättern oder auch der Einsatz dämpfender Blätter erprobt, was jedoch nur mit einem relativ hohen technischen und somit ökonomischen Aufwand verbunden ist.

Beim Anfahren von Windkraftanlagen müssen Resonanzfrequenzen von Turm und Rotorblättern in der Regel durchfahren werden, was eine Erregung derselben bedeutet. Drehzahlvariable Anlagen haben zudem das Problem, daß sie in einem weiten Drehzahlbereich arbeiten, und somit sehr nahe an einen kritischen Drehzahlbereich herankommen oder diesen sogar im Betrieb durchfahren müssen, was zumindest eine kurzzeitige Erregung der Resonanzfrequenzen bedeutet.

Neben der auftretenden Materialermüdung durch die Schwingungen an tragenden Bauteilen verursachen die Schwingungen auch erhöhten Verschleiß bzw. Schäden an Lagern von Getrieben und von Generatoren, bzw. an den Getriebeverzahnungen.

All dieses macht es erforderlich, die Windkraftanlagen bzw. ihre schwingungsempfindlichen Bauteile der Dämpfung zu unterwerfen. Hierfür eignen sich primär elastomere Bauteile. DE 4 428 424 offenbart einen Schwingungskörper mit elastomeren Ringkörpern zum in Einbau in rotorgetriebene Windkraftwerke. Bisher werden in Windkraftanlagen, insbesondere in solchen mit mehr als 40 m Rotordurchmesser in der Regel Elastomerbauteile zur Körperschallentkopplung, also zur Reduzierung von störenden Geräuschen durch die bewegten und schwingenden Teile einer Anlage, eingesetzt. Die Elastomerkörper bestehen zur optimalen Schwingungsisolierung aus hochelastischem Elastomer wie z.B. Naturkautschuk, welcher jedoch eine verhältnismäßige geringe Dämpfung aufweist. Bei großen Anlagen reicht diese Dämpfung jedoch nicht aus. Insbesondere die Rotorblätter sind zum Teil erheblichen Schwingungsprozessen ausgesetzt, die durch die geringe Dämpfungseigenschaft, der vorwiegend für die Körperschallentkopplung ausgelegten Elastomere nicht ausreichend unterbunden oder verringert werden können. Eine Erhöhung der Dämpfungseigenschaften durch Einsatz weniger elastischer bzw. weicher Elastomere reduziert aber zum Teil erheblich die gewünschte Körperschallentkopplung.

Bei der Körperschallentkopplung von Windkraftanlagen hat sich beim bisher üblichen Einsatz von wenig gedämpften Maschinenlagern gezeigt, daß sich mit zunehmender Weichheit der Elastomerbauteile häufiger Schwingungen an den Rotorblättern auftreten als bei steiferen Bauteilen. Steifere Maschinenlager wirken sich jedoch ungünstig auf die Körperschallübertragung auf den Turm, der als Resonanzkörper wirkt aus.

Beim Einsatz hochdämpfender Elastomere wirkt sich die weichere Lagerung positiv auf das Dämpfungsverhalten und damit auf das Schwingverhalten der gesamten Windkraftanlage aus. Gleichzeitig wird die Körperschallisolation durch weichere Bauteile verbessert.

Überraschend wurde nun gefunden, daß elastomere Lager, die wenig elastisch, also stark dämpfend sind aber gleichzeitig genügend weich sind, um große Federwege zu ermöglichen, Schwingungen, insbesondere an den Rotorblättern, deutlich zu reduzieren vermögen, aber gleichzeitig für eine ausgezeichnete Verringerung der Körperschalls sorgen. Die großen Federwege werden durch den Einsatz von großflächigen Elastomerbauteilen mit großen Schichtdicken oder auch mehrschichtigen Elastomerbauteilen realisiert. Solche Bauteile sind nach dem Stand der Technik verfügbar. Hierzu müssen erfindungsgemäß elastomere Lager eingesetzt werden, die einen deutlich höheren Dämpfungswinkel aufweisen als die bislang verwendeten Materialien, die einen Dämpfungswinkel zwischen 3 unter 9° haben.

Beim Bremsen von Windkraftanlagen treten starke Torsionsschwingungen im Antriebsstrang auf. Diese werden durch den Einsatz der erfindungsgemäßen dämpfenden Elastomerbauteile deutlich reduziert. Auch die von den am Turm vorbeilaufenden Rotorblättern erregten Schwingungen wirken sich beim Einsatz der beschriebenen Bauteile geringer aus.

Gegenstand der Erfindung ist somit ein Verfahren zur Reduzierung von Schwingungen von Bauteilen in einer Windkraftanlage unter gleichzeitiger Isolierung des Kärperschalls, daß dadurch gekennzeichnet ist, daß man Lager aus einem elastomeren Werkstoff einsetzt, welcher einen Dämpfungswinkel von mindestens 12° aufweist und eine Federsteifigkeit besitzt, die so gewählt ist, daß die Eigenfrequenz der so darauf gelagerten schwingenden Bauteile kleiner als 50 Hz ist.

Durch das Einbringen von weichen Lagerungen mit hoher Dämpfung werden die Dämpfungseigenschaften des Gesamtsystems positiv beeinflußt. Damit können, wie im Versuch festgestellt werden kann, neben der Körperschallentkopplung auch Schwingungen von Bauteilen mit den gleichen Elementen reduziert werden. Da die Körperschallisolierung mit größerer Materialdämpfung ungünstiger und mit weicheren Elementen wiederum günstiger wird, kann die durch den Einsatz von dämpfendem Material verursachte Reduzierung der Körperschallisolation durch insgesamt weichere Elemente ausgeglichen werden. Die weicheren Elemente wirken sich wiederum positiv auf die Schwingungsreduzierung aus.

Besonders vorteilhaft und damit Gegenstand der Erfindung sind elastomere Bauteile bzw. Lager, die einen Dämpfungswinkel von 15 bis 30°, vorzugsweise zwischen 17 und 25°, und eine Federsteifigkeit besitzen, die so gewählt ist, daß die Eigenfrequenz der schwingenden Bauteile kleiner als 25 Hz, vorzugsweise kleiner als 10 Hz ist.
Für eine möglichst gute Körperschallisolierung sollte die Federsteifigkeit der isolierenden Elemente so ausgelegt sein, daß die im wesentlichen von der Federsteifigkeit der Elastomerbauteile, dem Gewicht und der Steifigkeit des isolierten Systems (Getriebe mit Rotor) und des tragenden Bauteils (Turm) abhängige Eigenfrequenz des gesamten Feder-Masse Systems möglichst klein ist, um möglichst tiefe Frequenzen des Körperschalls zu isolieren.

Gegenstand der Erfindung ist ebenfalls ein entsprechendes Verfahren, bei dem elastomere Werkstoffe eingesetzt werden, deren Schubmodul 0,3 - 4,0 N / mm², vorzugsweise 0,5 - 2,0 N / mm² beträgt.

Gegenstand der Erfindung ist ebenfalls ein entsprechendes Verfahren, bei dem unterschiedliche Lager mit elastomeren Werkstoffen eingesetzt werden, die vorwiegend zur Dämpfung oder vorwiegend zur Körperschallisolierung geeignet sind. Diese Lösung ist zwar aufwendig, es können hiermit aber gezielt und selektiv Dämpfungs- und Körperschallprobleme beseitigt werden. Die Erfindung lehrt überdies, in welchen Bereichen der Windkraftanlage entsprechende Elastomerbauteile eingebaut werden müssen, um besonders vorteilhafte Ergebnisse zu erzielen.

Somit ist ferner Gegenstand der Erfindung ein Verfahren, bei dem die Elastomere zwischen Maschinenträger (6) und Getriebe (4) angebracht sind aber auch bei dem die Elastomere in Buchsenlagerungen (18) eingesetzt werden, welche mit dem Getriebe (4) über die Drehmomentstützen (8) und dem Maschinenträger (6) über die Ständer (9) verbunden sind. Als Buchsenlager kommen dabei Lager in Frage, wie sie z. B. in der DE 199 18 379 beschrieben sind.

Ferner können die elastomeren Bauteile auch sehr vorteilhaft in Form von zwei Buchsenlagerungen (18) vorliegen, die zusammen mit einem Stehlager (2), welches die Rotorwelle (3) aufnimmt, eine Dreipunktlagerung für die Rotoreinheit (1), (3) bilden.
Weitere Ausführungsformen des erfindungsgemäßen Verfahrens können durch ein das Getriebe (4) umschlingendes Elastomersegment (50) dargestellt werden, welches zwischen dem senkrecht abgewinkelten Teil des Maschinenträgers (6) und dem Spannring (51) bzw. dem Getriebeflansch (52) angebracht und verspannt wird.

Die beschriebenen Einbauvarianten zeigen überraschenderweise bei sehr guter Körperschallentkopplung eine ausgezeichnete Dämpfung der Schwingungen vor allem der Rotorblätter der Windkraftanlage.

Schließlich ist Gegenstand der Erfindung die Verwendung von elastomeren Bauteilen, welche einen Dämpfungswinkel von mindestens 12° aufweisen und eine Federsteifigkeit besitzen, die so gewählt ist, daß die Eigenfrequenz der schwingenden Bauteile kleiner als 50 Hz ist, zur Reduzierung von Schwingungen in Windkraftanlagen unter gleichzeitiger Isolierung des Körperschalls, sowie ihre besonderen oben und unten beschriebenen Ausführungsformen.

Im folgenden sollen einige oben und unten benutzte physikalischen Begriffe erläutert werden, die zum besseren Verständnis des technisch-physikalischen Zusammenhangs der Erfindung beitragen.

Dämpfung bewirkt vor allem bei höheren Frequenzen durch die scheinbare Verhärtung des Materials eine Verschlechterung der Körperschallentkopplung. Dämpfung ist eine reine Materialkonstante. Der Dämpfungswinkel ist eine Werkstoffeigenschaft und ist temperatur- und frequenzabhängig.

Weichheit (geringe Federsteifigkeit, große Einfederung) bringt eine Verbesserung der Körperschallentkopplung mit sich. Die Federsteifigkeit ist abhängig vom Schubmodul des Elastomers sowie von der Geometrie der Bauteile bzw. der Anlage. Beide zusammen ergeben den Elastizitätsmodul. Die Federsteifigkeit ist bei gedämpften Systemen abhängig von der Frequenz.

Der Schubmodul ist eine Materialkonstante und ist bei Elastomeren proportional zu sogenannten Shore Härte. Zur Körperschallentkopplung werden erfindungsgemäß Materialien in der Härte zwischen 30 Shore A und 90 Shore A besonders 50 Shore A bis 65 Shore A, eingesetzt, was einem quasistatischen Schubmodul von 0,4N / mm² bis 3 N / mm² besonders 0,7N / mm² bis 1,2N / mm² entspricht.

Erfindungsgemäß sind Werkstoffe mit Dämpfungswinkeln vorgesehen, deutlich über 10°, vorwiegend 15° bis 30°. In der Realität sind bisher Werkstoffe mit einem Dämpfungswinkel von mindestens 15° über einen weiten Temperaturbereich verfügbar. Der Werkstoff sollte in dem für Windkraftanlagen üblichen Temperaturbereich möglichst größer als 15° sein. In der Regel werden Elastomere mit dämpfenden Eigenschaften eingesetzt, deren Dämpfungswinkel bei den üblicherweise bei starkem Wind auftretenden Temperaturen zwischen - 10°C und +40°C mindestens 15° beträgt. Dabei kann man in Kauf nehmen, daß die Glasübergangstemperatur bei diesem Werkstoff bereits bei Temperaturen knapp unter dem Gefrierpunkt z.B. -10°C auftreten kann, da infolge der inneren Materialdämpfung eine Erwärmung der Teile erfolgt und gleichzeitig bei Betrieb der Anlage auch bei geringen Außentemperaturen die Gondel der Windkraftanlage in der die Bauteile eingebaut sind, durch die Abwärme von Generator und Getriebe temperiert ist.

Um auch bei extremen Temperaturen einen optimalen Dämpfungswinkel zu erreichen sollte der Werkstoff angepaßt werden. So wird z.B. für Anlagen welche in Kaltwetterbereichen z.B. in Kanada eingesetzt werden ein anderer Werkstoff erforderlich als für Anlagen in heißem Klima z.B. in der Sahara. Beim Einsatz in Gebieten mit sehr starken Temperaturschwankungen kann es eventuell erforderlich sein die Bauteile zu temperieren.

Werkstoffe, die für das erfindungsgemäße Verfahren eingesetzt werden können, sind an sich bekannt. Die folgende Tabelle gibt nur einen Ausschnitt der Möglichkeiten wieder.

| | | Dämpfungswinkel (bei 15 Hz) | |
|---|---|---|---|
| Werkstoff | Werkstoff Kurzbezeichnung | Delta bei 20°C | Delta bei 80°C |
| Phenyl-Methyl-Polysiloxan | PMQ | 24 | 18 |
| Silicon Kautschuk | VMQ | 22 | 18 |
| Fluor Kautschuk | FKM | 23 | 8 |
| Butyl Kautschuk | IIR | 20 | 8 |
| Norbonen Kautschuk | PNR | 27 | 10 |
| Polyacrylat Kautschuk mit tiefer Glasübergangstemperatur | ACM | 18 | 13 |
| Polyacrylat Kautschuk mit hoher Glasübergangstemperatur | ACM | 29 | 10 |
| Clorbutadien-Kautschuk | CR | | |

Vorzugsweise werden nach der Erfindung ACM-Elastomere eingesetzt.

Die verwendeten elastomeren Elemente können nicht nur in Form eines einheitlichen Werkstoffes verwendet werden, sondern können beipielsweise auch schichtartig unter Verwendung gleicher oder unterschiedlicher Elastomere aufgebaut sein. Die einzelnen Schichten können wiederum durch dünne Platten aus unterschiedlich harten Materialien voneinander getrennt sein. Durch solche Systeme können in Verbindung mit der gewählten Geometrie des Elements selektiv unterschiedliche Federsteifigkeiten erreicht und auf das Gesamtsystem angepaßt werden.

Die besagten Materialien sind vorzugsweise Metalle oder Metallegierungen, können aber auch in Einzelfällen Hartkunststoffe, Keramikmaterialien oder Carbonfasern sein, oder diese Stoffe zusätzlich enthalten. Als geeignete Metalle sind vor allem zwei bis acht mm dicke Bleche aus Eisen und Stähle, Chrom-/Vanadium-Stähle, Leichtmetalle wie z.B. Aluminium, Titan, Zirkonium oder Tantal zu nennen oder auch Legierungen, die diese Metalle enthalten. Vorzugsweise finden Eisenbleche Verwendung.

In folgenden werden die Abbildungen näher beschrieben:
Abb. 1 stellt die Gondel und den Turm einer Windkraftanlage dar, in welcher die erfindungsgemäßen Elastomerbauteile zwischen Getriebe und Maschinenträgerangebracht sind.
Abb. 2: zeigt die erfindungsgemäßen Elastomerbauteile in Form von Buchsenelementen eingebaut in einer Windkraftanlage mit Dreipunktlagerung der Rotoreinheit.
Abb. 3. : zeigt die erfindungsgemäßen Elastomerbauteile in Form von das Getriebe umschlingenden Segmenten, welche gegen dieses und den Maschinenträger verspannt sind.
Abb. 4: zeigt eine Seiten- und eine Draufsicht einer Vielzahl von Elastomerlager und eines Dämpfungsringes, die zwischen Turmkopf und Maschinenträger angebracht sind.
Die beschriebenen stark dämpfenden und weichen elastomeren Lager können erfindungsgemäß an unterschiedlichen Stellen in der Windkraftanlage eingebaut werden. Vorzugsweise werden sie jedoch im Bereich der Gondel und hier wiederum in der Nähe des Getriebes eingebaut, um optimale Wirkung, insbesondere auf die schwingungsanfälligen Rotorblätter zu entfalten. Im folgenden werden die Bezugsgrößen in den Zeichnungen erläutert:

| | | | |
|---|---|---|---|
| 1 | Rotor | 23 | Mittelfenster |
| 2 | Stehlager | 24 | Trennfugenfenster |
| 3 | Rotorwelle | 25 | Seite mit geringer Ausgangs-schichtdicke |
| 4 | Getriebe | 26 | Seite mit größerer Ausgangs-schichtdicke zur Buchsenvorspannung |
| 5 | Generator | 27 | Verschraubung Ständer |
| 6 | Maschinenträger | 28 | Azimutlager |
| 7 | Turm | | |
| 8 | Getriebe - Drehmomentstütze | | |
| 9 | Ständer | 40 | Maschinenlager zur Getriebelagerung |
| 10 | Ultrabuchsen Achse | 41 | Elastomerbauteil (ein- oder Mehrschichtig |
| 11 | Untere Ultrabuchsen Halbschale | 42 | Getriebeverschraubung am Maschinenlager |
| 12 | Obere Ultrabuchsen Halbschale | 43 | Getriebelager Verschraubung am Maschinenrahmen |
| 13 | innere Elastomerschicht | 44 | Rotorlagerung im Getriebegehäuse integriert |
| 14 | äußere Elastomerschicht | 45 | Gelenkwelle |
| 15 | inneres Blech | 46 | Generatorlager |
| 16 | äußeres Blech | 50 | Elastomer Kreissegmente |
| 17 | Zwischenblech | 51 | Spannring zum Vorspannen der Elastomerbauteile |
| 18 | Gesamte Ultrabuchsenlagerung | 52 | um laufender Getriebe Trageflansch |
| 19 | Krafteinleitung zur Buchsenvorspannung | 61 | Oberer Turmflansch |
| 20 | Radius innen | 62 | Verschraubung des Dämpfungsringes am oberen Turmflansch |
| 21 | Radius außen | 63 | Verschraubung des Dämpfungsringes mit dem Azimutlager |
| 22 | Mittelpunktversatz | 64 | Dämpfungsring |

Im folgenden werden einige Beispiele für Einbauvarianten beschrieben, die effektvoll Körperschallentkopplung bei gleichzeitiger Dämpfung aufweisen.

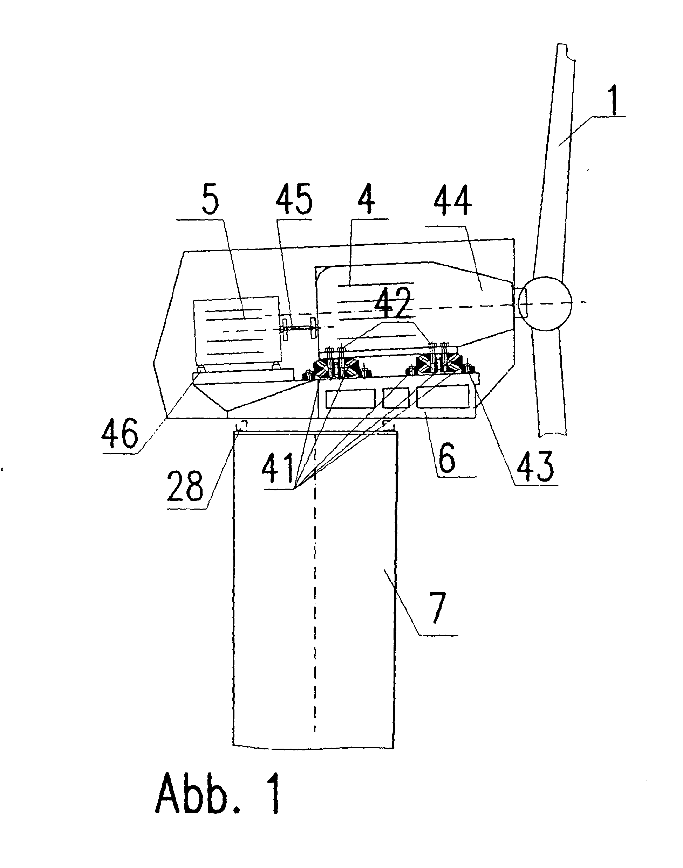

Variante 1 ist eine Lagerung der Getriebe - Rotoreinheit auf gedämpften Elastomerlagern zwischen Getriebe und Maschinenträger. Eine solche Lagerung ist in Abb. 1 dargestellt. Bei dieser Lagerung wird das Getriebe (4) mittels Elastomerbauteilen (41) auf dem Maschinenrahmen (6) befestigt. Die Elastomerbauteile sind zur Reduzierung des Körperschalls eingesetzt, gleichzeitig sind die Bauteile aus hoch dämpfendem Elastomer aufgebaut, dessen Materialdämpfung sich auf das Schwingungsverhalten der gesamten Windkraftanlage auswirkt. Die Elastomerbauteile müssen in Zug- Druckrichtung und Querrichtung belastbar sein und entsprechen weitgehend denen, welche in der deutschen Gebrauchsmusteranmeldung 298 06 010.8 beschrieben sind. Die Bauteile sind für möglichst große Federwege ausgelegt.

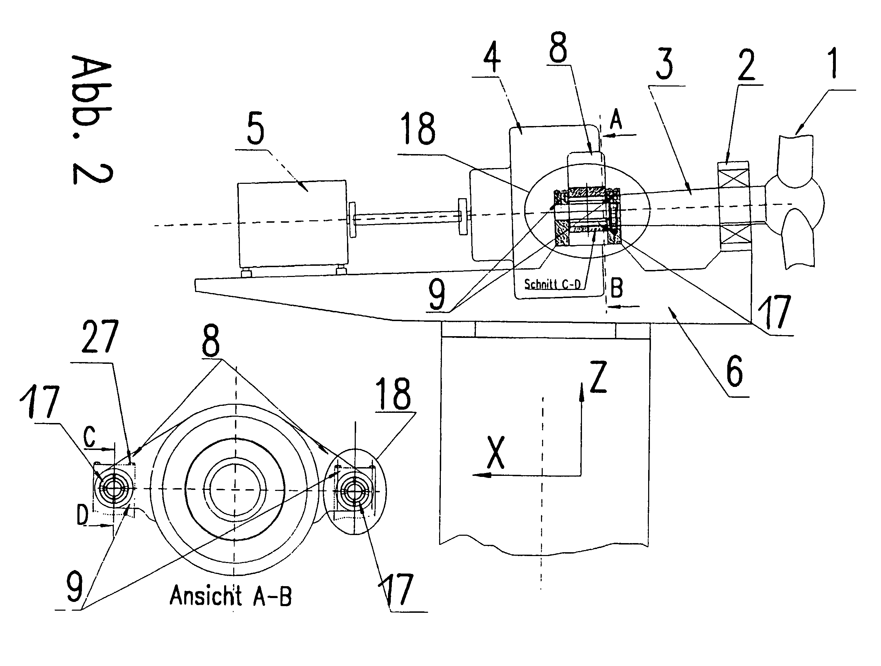

Variante 2 stellt eine Lagerung des Getriebes mit Dreipunktlager der Rotoreinheit dar. Bei dieser Lagerung ist wie in Abb. 2 dargestellt die Rotorwelle (3) durch ein feststehendes Stehlager (2) zu dem mit Elastomerkörpern befestigten Getriebe (4) geführt. Damit hängt die gesamte Rotoreinheit an drei Punkten, nämlich dem Stehlager und den beiden elastischen Aufhängungen. Werden die beiden elastischen Lager möglichst hoch dämpfend und möglichst weich ausgeführt, so ergibt sich auch hier ein positiven Einfluß auf das Schwingverhalten und das Dämpfungsverhalten der gesamten Windkraftanlage. Auch hier können ein- und mehrschichtige Lager aus hoch dämpfendem Material eingesetzt werden. Die Elastomerlager können als konventionelle ein - bzw. mehrschichtige Ultrabuchsenlager welche rohrförmig aufgebaut sein können oder auch aus zwei Halbschaten zusammengesetzt sein können. Diese können auch, wie in der deutschen Patentanmeldung 199 18 379.1 beschrieben, als Spannbuchsen ausgeführt werden.

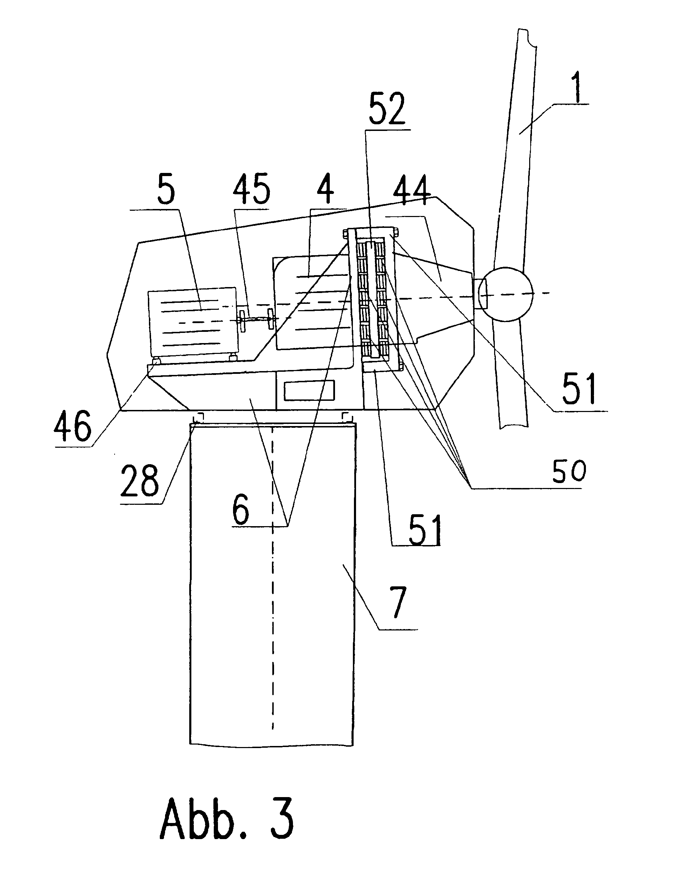

Variante 3 beschreibt einen das Getriebe umschlingenden Elastomerflansch. Bei dieser Lagerung ist, wie in Abb. 3 dargestellt, die Getriebe - Rotoreinheit (4), (44) an dem abgewinkelten Maschinenrahmen (6) mit ringförmig angeordneten Elastomerlagern (50) verklemmt. Der Maschinenrahmen (6) bildet dabei im oberen Bereich einen Ring durch welchen das Getriebe eingeschoben ist. Am Getriebegehäuse ist ein ringförmiger Flansch (52) angegossen. Vor- und nach dem Getriebeflansch sind mehrere Elastomerlager ringförmig angeordnet, welche gleichzeitig zwischen dem senkrecht stehenden Teil des Maschinenträgers und dem Spannring (51) verklemmt sind. Werden die ringförmigen Elastomerkörper, welche einschichtig oder mehrschichtig ausgeführt sein können, aus hoch dämpfendem Material ausgeführt, so ergeben sich ähnlich Dämpfungseigenschaften auf das Gesamtsystem wie zuvor beschrieben.

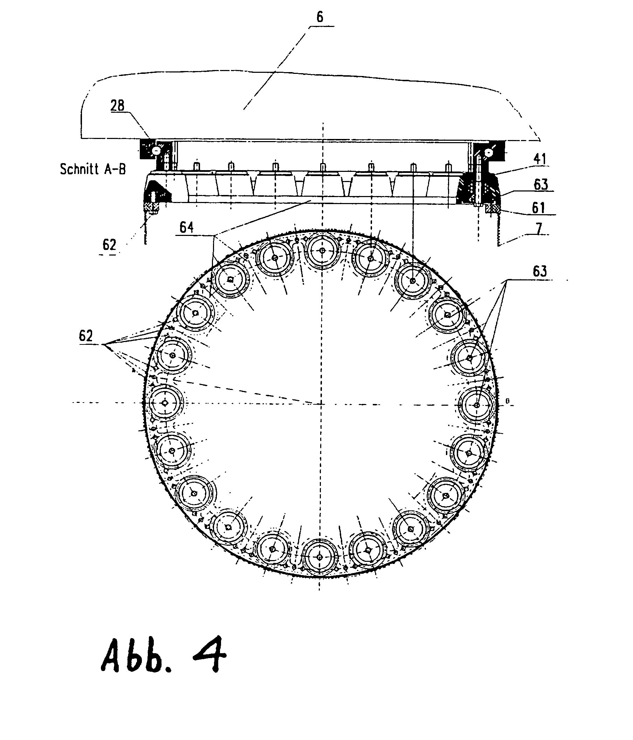

Variante 4 beschreibt eine Lagerung am oberen Turmende der Anlage. Dabei kann das in Variante 3 beschriebene System in gleicher Form im Turmkopf eingesetzt werden. Parallel dazu sind Systeme mit vielen Einzelelementen möglich, wie sie in Variante 1 beschrieben sind. Diese können wie in Abb. 4 dargestellt in einem Dämpfungsring (54) integriert werden. Dieser Dämpfungsring (54) wird unterhalb des Azimutlagers (28) eingebaut. Alternativ kann der Dämpfungsring auch oberhalb des Azimutlagers eingebaut werden.

Variante 5 stellt die Lagerung eines Vielpolgenerators dar. Die elastische dämpfende Lagerung kann ähnlich wie in Variante 3 an der Rotorwelle erfolgen. Darüber hinaus kann die Lagerung direkt am Vielpolgenerator erfolgen. Der Einsatz des in Variante 4 beschriebenen Dämpfungsringes ist möglich.

Bei Variante 6 können die Elemente wie in Variante 3 und Variante 4 beschrieben, am Blattanschluß an der Rotornabe eingesetzt werden.

Bei Variante 7 sind die Dämpfungselemente in den Turmstößen und im Fundamentbereich untergebracht. Die dämpfenden Elemente können auch zwischen einem oder mehreren Turmstößen eingebracht werden. Bei dem Einbringen von Dämpfungsgliedern in den Turmstößen sind mit zunehmendem Abstand vom Maschinenhaus nur noch kleinere Wege erforderlich, da die gedämpfte Bewegung damit in Höhe der Gondel durch die Zeigerwirkung deutlich größer wird. Im Bereich des Fundamentes läßt der Einsatz von dämpfenden Elementen eine definierte Nickbewegung des Turmes zu.

### Beispiel:

Zur Bestätigung der angegebenen erfindungsgemäßen Wirkungen wurde folgender Vergleich mit zwei sonst baugleichen Windkraftanlagen durchgeführt:
- Beide Anlagen stehen in etwa 500 m Abstand auf sonst unbelastetem Gelände.
- Windkraftanlage 1 erhielt auf Kosten der Körperschallentkopplung eine sehr konservative harte Lagerung mit besonders steif ausgeführten Elementen, da damit bis dahin hinsichtlich des Schwingverhaltens die besten Erfahrungen gemacht wurden.
- Windkraftanlage 2 erhielt besonders weiche Elastomerlager, welche bei Belastung deutlich größere Federwege ausüben als die in Variante 1 installierten Maschinenlager, jedoch mit hoher Materialdämpfung. Anlagen, welche bereits früher mit vergleichbar weichen Elementen wie Windkraftanlage 2 ohne die beschriebene hohe Materialdämpfung ausgestattet wurden, neigen besonders stark zum Schwingen.
- Beide Anlagen wurden nahe der Nordseeküste unweit nebeneinander aufgestellt und betrieben.
- Die besonders steif gelagerte Anlage 1 mit den wenig gedämpften Elastomerbauteilen und besonders steifer Lagerung neigte zwar weniger zum Schwingen als vergleichbare Anlagen mit weicherer Lagerung. Das Aufschaukeln der Blätter wurde jedoch bei besonders hohen Windgeschwindigkeit häufig beobachtet.
- An Anlage 2 mit den dämpfenden Bauteilen sind selbst bei der im Februar 1999 aufgetretenen Jahrhundert - Sturmflut keine Schwingungen der Rotorblätter aufgetreten, während Anlage 1 gleichzeitig ständig wegen Rotorblatt - Schwingungen abschaltete.
- Dieser Versuch bestätigt die erfindungsgemäße technische Lehre in der Praxis.
- Die zwischen Getriebe und Maschinenrahmen eingebaute Dämpfung wirkt sich dämpfend auf die weit entfernt liegenden Rotorblätter aus und verhindert ein Aufschwingen derselben.

## Patentansprüche

1. Verfahren zur Reduzierung von Schwingungen von Bauteilen in einer Windkraftanlage unter gleichzeitiger Isolierung des Körperschalls, **dadurch gekennzeichnet, daß** man in der Anlage Lager aus einem elastomeren Werkstoff einsetzt, welcher einen Dämpfungswinkel von mindestens 12° aufweist und eine Federsteifigkeit besitzt, die so gewählt ist, daß die Eigenfrequenz der so darauf gelagerten schwingenden Bauteile kleiner als 50 Hz ist.

2. Verfahren nach Anspruch 2, **dadurch gekennzeichnet, daß** man einen elastomeren Werkstoff mit einem Dämpfungswinkel von 15 - 30° einsetzt.

3. Verfahren nach Anspruch 1 oder 2, **dadurch gekennzeichnet, daß** die Federsteifigkeit so gewählt ist, daß die Eigenfrequenz der schwingenden Bauteile kleiner als 10 Hz ist.

4. Verfahren nach Anspruch 3, **dadurch gekennzeichnet, daß** das Schubmodul des elastomeren Werkstoffs 0,3 - 4,0 N/mm² beträgt.

5. Verfahren nach einem der Ansprüche 1 bis 4, **dadurch gekennzeichnet, daß** unterschiedliche Lager mit elastomeren Werkstoffen eingesetzt werden, die vorwiegend zur Dämpfung oder vorwiegend zur Körperschallisolierung geeignet sind.

6. Verfahren nach einem der Ansprüche 1 bis 5, **dadurch gekennzeichnet, daß** die Elastomere zwischen Maschinenträger (6) und Getriebe (4) angebracht sind.

7. Verfahren nach einem der Ansprüche 1 bis 5, **dadurch gekennzeichnet, daß** die Elastomere in Buchsenlagerungen (18) eingesetzt werden, welche einerseits mit dem Getriebe (4) über die Drehmomentstützen (8) und andrerseits mit dem Maschinenträger (6) über die Ständer (9) verbunden sind.

8. Verfahren nach Anspruch 7, **dadurch gekennzeichnet, daß** zwei Buchsenlagerungen (18) und ein Stehlager (2), welches die Rotorwelle (3) aufnimmt, eingesetzt werden und so eine Dreipunktlagerung für die Rotoreinheit (1), (3) bilden.

9. Verfahren nach einem der Ansprüche 1 bis 5, **dadurch gekennzeichnet, daß** ein das Getriebe (4) umschlingendes Elastomersegment (50) eingesetzt wird, welches zwischen dem senkrecht abgewinkelten Teil des Maschinenträgers (6) und dem Spannring (51) bzw. dem Getriebeflansch (52) angebracht und verspannt wird.

10. Verfahren nach einem der Ansprüche 1 bis 5, **dadurch gekennzeichnet, daß** eine Vielzahl von Elastomerlager (63) zwischen Turmkopf und Maschinenträger (6) angebracht werden.

11. Verfahren nach Anspruch 10, **dadurch gekennzeichnet, daß** die Elastomerlager (63) in einem Dämpfungsring (54) integriert werden.

12. Verfahren nach einem der Ansprüche 1 bis 11 zur Reduzierung der Schwingungen der Rotorblätter einer Windkraftanlage.

13. Verwendung von elastomeren Lagern für Bauteilen, welche einen Dämpfungswinkel von mindestens 12° aufweisen und eine Federsteifigkeit besitzen, die so gewählt ist, daß die Eigenfrequenz der so darauf gelagerten schwingenden Bauteile kleiner als 50 Hz ist, zur Reduzierung von Schwingungen in Windkraftanlagen unter gleichzeitiger Isolierung des Körperschalls.

## Claims

1. Method for reducing vibrations of components in a wind turbine with simultaneous structure-borne sound insulation, **characterized in that** bearings of an elastomeric material which has a damping angle of at least 12° and a spring stiffness that is selected so that the inherent frequency of the vibrating components supported thereon is less than 50 Hz are employed in the turbine.

2. Method according to Claim 2, **characterized in that** an elastomeric material having a damping angle of 15-30° is employed.

3. Method according to Claim 1 or 2, **characterized in that** the spring stiffness is selected so that the inherent frequency of the vibrating components is less than 10 Hz.

4. Method according to Claim 3, **characterized in that** the shear modulus of the elastomeric material is 0.3-4.0 N/mm².

5. Method according to one of Claims 1 to 4, **characterized in that** use is made of different bearings with elastomeric materials which are predominantly suitable for damping or predominantly suitable for structure-borne sound insulation.

6. Method according to one of Claims 1 to 5, **characterized in that** the elastomers are installed between bedplate (6) and gearbox (4).

7. Method according to one of Claims 1 to 5, **characterized in that** the elastomers are employed in bush bearings (18) which are connected on the one hand to the gearbox (4) via the torque bearings (8) and on the other hand to the bedplate (6) via the supports (9).

8. Method according to Claim 7, **characterized in that** two bush bearings (18) and one pedestal bearing (2), which accommodates the rotor shaft (3), are employed and thus form a three-point bearing for the rotor unit (1), (3).

9. Method according to one of Claims 1 to 5, **characterized in that** use is made of an elastomer segment (50) which surrounds the gearbox (4) and is installed and tensioned between the vertically angled part of the bedplate (6) and the clamping ring (51) or the gearbox flange (52).

10. Method according to one of Claims 1 to 5, **characterized in that** a multiplicity of elastomer bearings (63) are installed between tower head and bedplate (6).

11. Method according to Claim 10, **characterized in that** the elastomer bearings (63) are integrated in a damping ring (54).

12. Method according to one of Claims 1 to 11 for reducing the vibrations of the rotor blades of a wind turbine.

13. Use of elastomeric bearings for components which have a damping angle of at least 12° and a spring stiffness which is selected so that the inherent frequency of the vibrating components supported thereon is less than 50 Hz for reducing vibrations in wind turbines with simultaneous structure-borne sound insulation.

## Revendications

1. Procédé pour réduire des vibrations de composants dans une éolienne avec isolation simultanée vis-à-vis du bruit de structure, **caractérisé en ce que** des paliers en un matériau élastomérique qui présente un angle d'amortissement d'au moins 12° et une raideur élastique qui est choisie de telle sorte que la fréquence inhérente des composants vibrants supportés dessus soit inférieure à 50 Hz sont utilisés dans l'éolienne.

2. Procédé selon la revendication 1, **caractérisé en ce qu'**un matériau élastomérique présentant un angle d'amortissement de 15 - 30° est utilisé.

3. Procédé selon la revendication 1 ou 2, **caractérisé en ce que** la raideur élastique est choisie de telle sorte que la fréquence inhérente des composants vibrants soit inférieure à 10 Hz.

4. Procédé selon la revendication 3, **caractérisé en ce que** le module de cisaillement du matériau élastomérique est de 0,3 - 4,0 N/mm².

5. Procédé selon l'une des revendications 1 à 4, **caractérisé en ce qu'**on utilise des paliers différents en des matériaux élastomériques qui conviennent de façon prédominante pour l'amortissement ou qui conviennent de façon prédominante pour une isolation vis-à-vis du bruit de structure.

6. Procédé selon l'une des revendications 1 à 5, **caractérisé en ce que** les élastomères sont installés entre une plaque de base (6) et une transmission (4).

7. Procédé selon l'une des revendications 1 à 5, **caractérisé en ce que** les élastomères sont utilisés dans des paliers à douille (18) qui sont connectés d'une part à la transmission (4) via les paliers de couple (8) et d'autre part à la plaque de base (6) via les supports (9).

8. Procédé selon la revendication 7, **caractérisé en ce que** deux paliers à douille (18) et une chaise-palier (2) qui reçoit l'arbre de rotor (3) sont utilisés et forment ainsi un palier à trois points pour l'unité de rotor (1), (3).

9. Procédé selon l'une des revendications 1 à 5, **caractérisé en ce qu'**on utilise un segment en élastomère (50) qui entoure la transmission (4) et qui est installé et mis sous tension entre la partie angulée verticalement de la plaque de base (6) et la bague de fixation (51) de la bride de transmission (52).

10. Procédé selon l'une des revendications 1 à 5, **caractérisé en ce qu'**une multiplicité de paliers élastomériques (63) sont installés entre une tête de tour et une plaque de base (6).

11. Procédé selon la revendication 10, **caractérisé en ce que** les paliers élastomériques (63) sont intégrés dans une bague d'amortissement (54).

12. Procédé selon l'une des revendications 1 à 11 pour réduire les vibrations des pales de rotor d'une éolienne.

13. Utilisation de paliers élastomériques pour des composants qui présentent un angle d'amortissement d'au moins 12° et une raideur élastique qui est choisie de telle sorte que la fréquence inhérente des composants vibrants supportés dessus soit inférieure à 50 Hz pour réduire des vibrations dans des éoliennes avec une isolation simultanée vis-à-vis du bruit de structure.
